# EUROPEAN PATENT SPECIFICATION

(11) **EP 2 269 262 B1**
(45) Date of publication and mention of the grant of the patent: **14.07.2021**
(21) Application number: 09719358.5
(22) Date of filing: 13.03.2009
(51) Int. Cl.: H01M 10/42, H01G 9/28, H01M 16/00, H02J 7/34, H02J 7/00, H02P 1/18

(54) **LEADLESS STARTING ACCUMULATOR BATTERY, PROCESSING METHOD AND ITS USE, PARTICULARLY FOR COMBUSTION ENGINES AND MOTOR VEHICLES**
BLEIFREIE ANLASSAKKUMULATORBATTERIE, VERARBEITUNGSVERFAHREN UND VERWENDUNG DAFÜR INSBESONDERE FÜR VERBRENNUNGSMOTOREN UND KRAFTFAHRZEUGE
BATTERIE D ACCUMULATEURS DE DÉMARRAGE SANS PLOMB, PROCÉDÉ DE TRAITEMENT ET SON UTILISATION, EN PARTICULIER POUR LES MOTEURS À COMBUSTION ET LES VÉHICULES À MOTEUR

(30) Priority: 14.03.2008 CZ 20080169
(43) Date of publication of application: 05.01.2011
(73) Proprietor: Kinitolo Consulting Limited, 1048 Nicosia (CY)
(72) Inventor: WENDEL, Soren, 16500 Praha 6 (CZ); BlZA ,Vladimir, 28601 Caslav (CZ)
(74) Representative: PATENTSERVIS Praha, a.s.
(86) International application number: PCT/CZ2009/000039
(87) International publication number: WO 2009/111999

(56) References cited:
- EP-A- 1 462 299
- WO-A1-2007/135934
- JP-A- 10 164 768
- JP-A- 2005 080 470
- US-A1- 2006 098 390
- US-A1- 2006 250 113
- US-A1- 2007 090 808
- US-B1- 6 373 152

## Description

### Technical Field

This invention relates to the new type of accumulator batteries with use for initiation of compression-ignition and spark-ignition combustion engines and batteries for all types of motor vehicles.

### Background Art

All known types of initiation batteries for combustion engines and motor vehicles (hereinafter called "auto batteries") are based on electrochemical reaction of secondary lead-acid cell (hereinafter called "lead battery"). All types of lead auto batteries contain lead as electrodes and sulphuric acid H₂SO₄ solution as electrolyte and during discharging and charging the known chemical process is occurring. These different types of lead auto batteries vary only in cell construction (shape and method of electrodes manufacture, cell shape, degasification channels and valves, etc.), material of lead paste decreasing lead consumption during manufacture, separators, electrolyte additives, etc. None of today known types is fully hermetically closed, the partial release of substances contained in the battery to the surrounding environment is always occurring during the operation. With the most modern types, co called AGM and gel lead batteries, this effect can occur only when overcharging the battery. All today known types contain toxic (lead Pb) and dangerous (sulfuric acid H₂SO₄ solution) substances according to the meaning of Directive 2002/95/EC RoHS. Today known types of lead auto batteries have guaranteed the operating temperature ranging between -18°C to 40°C.

Contemporary NiMH, Li-Ion and Li-Pol cells are not capable of delivering or receiving sufficient high currents and are not capable of delivering or receiving effectively the energy in temperatures below -20°C.

### Nickel-Cadmium Accumulators (NiCd)

The nickel is positive electrode, cadmium is the negative and potassium hydroxide fixed" in separator and electrodes is the electrolyte. They are popular thanks to their favorable characteristics such as weight - capacity ratio, are convenient even for high current load - have charged inner resistance, provide greater current, can be charged quickly and are more resistant to improper use (overcharging or deep discharging); work even under extreme climatic conditions (to -40 °C). They can be stored discharged without loss in electric properties practically for any time. The disadvantage is that it contains cadmium, which is a poisonous heavy metal with ability to cumulate in organism and can cause serious, fatal diseases. They have smaller capacity (up to ∼ 1100 mAh) and greater self-discharging (the inner resistance is raising).

### Nickel-metal hydride Accumulators (NiMH)

They appear from nickel-cadmium accumulators, but are designed to have higher capacity while having the same volume, and to be less dangerous for environment. The positive electrode is nickel again, but the negative one is hydride of metal compound, for example nickel oxide Ni(OH)2 hydroxide and the electrolyte is again potassium hydroxide. They have nominal voltage (1,2 - 1,25 V) and identical charging regime as NiCd, capacity is 40% higher and they have flat discharging characteristics, ergo smaller self-discharging, but their use under extreme climatic conditions is problematic - down to -10°C (some may resist -20°C) and the possibility of high discharging currents is how limited to tenth of the capacity. They can be stored charged and discharged, but it is vital to charge and discharge them a few times at least once a year, or, due to the chemical reactions, the accumulator electrodes damage and irreversible loss of capacity will occur.

### Lithium-Ion Accumulators (Li-Ion)

They come from primary lithium cells. The positive electrode comprises of the compound of lithium oxides and another metal (usually lithium cobalt(III) oxide +Li20.Co203), the negative is carbon mixed with other chemicals, and compound of esters is the electrolyte (exact composition is protected by particular producers, the commonly used is lithium tetrafluoroborate LiBF4). They have voltage rating 3,6 V. These cannot be charged and discharged with excessive current and the disadvantage is the demand of power protection of individual cells during charging and discharging. Final voltage during charging cannot be exceeded and the discharge under certain limit must' be refrained, which is on the work of protection circuits of every single cell. Operation conditions of Li-Ion accumulators are similar as with NiMH, and, when stored for longer time, it is required to charge them at least once a year to avoid the discharge under certain limit as the battery is self-discharging. The energy density is ranging from 120 to 130 Wh/kg or from 200 to 250 Wh/dm3.

### Lithium Polymer Accumulators (Li-Pol)

These cells come from Li-Ion cells; they have similar characteristics including nominal voltage, capacity and current. Contrary to Li-Ion, they are lighter with prismatic construction, but are mechanically little durable. Much like the Li-Ion, the disadvantage is the need of power protection of individual cells when charging and discharging, and low discharging currents.

### Ultracapacitors

In principle, the ultracapacitor is an electrolytic condenser manufactured with special technology, with goal to reach high capacity of thousands of farads while keeping the characteristics of condenser, particularly the ability of fast charging and discharging. The capacity of condenser is directly proportional to surface of electrodes and indirectly proportional to distance of electrodes (charges). Electrodes of ultracapacitor comprises of powder carbon, deposited on aluminum foil. Grains of carbon powder have surface of up to 2000m² per 1 gram of powder. Two electrodes are separated by separation sheet made of polypropylene; the space between electrodes is filled with liquid electrolyte. Large surface of electrode and very small distance of particular carbon grains (10-10 m of series) creates the capacity of series of farads. The carbon grains distance also reduces the operation voltage of the condenser to the amount of approx. 2,5 V. The result is a polarized condenser with very high capacity and very low series resistance, convenient for fast electric energy supply and storage. Electric "parameters of ultracapacitors are comparable with parameters of electrochemical sources (batteries, accumulators). The energy stored in ultracapacitor is, in series, 10 times higher than energy stored in common condenser. Low inner resistance enables fast discharging; superb power supply delivered by ultracapacitor reaches the values of series of kilowatts per 1kg of weight of the ultracapacitor. Electric parameters of ultracapacitor are preserved even under low temperatures down to -40°C.

Document US2006098390 discloses a battery comprising serial-parallel connection between traction batteries and ultra-capacitors fro hybrid vehicles.

### Disclosure of Invention

Presented invention according to claim 1, relates to the new type of accumulator battery, which is based, on serial-parallel connection of leadless types of NiMH, Li-Ion, Li-Pol secondary cells and ultracapacitors with possible advantageous use of electronic control unit. Accumulator battery according to this invention also has the same qualitative characteristics without use of electronic control unit. This invention consists in finding convenient alternative of -and improvement of existing lead batteries. Battery according to this invention is a new type of connection of known parts, with reaching better quantitative and qualitative characteristics than existing lead batteries.

The principle of new accumulator battery lies in serial-parallel connection of NiMH, Li-Ion, Li-Pol cells and ultracapacitors, with purpose to eliminate existing lead accumulators. By permanent connection of those components into one solid complex, it is guaranteed following: the preservation of deserved characteristics (size of inner resistance of particular connection branches, joints and their transition resistance, thermal conduction and heat removal from conductors, electric conductivity of connection conductors and terminals. electric isolation and mechanical solidity and individual components positioning stability) during entire operation time in any conditions, chemical and mechanical resistance in otherwise malign environment (excessive humidity, corrosion elements in the atmosphere, joints oxidation, etc.), corresponding temperature environment during operation (use of different filling agents in epoxy container, providing - according to actual needs - heat conductivity or, respectively, heat isolation), eventually their combination for various parts of new type auto battery for maximum utilization of advantageous characteristics of particular components such as high capacity of NiMH, Li-Ion or Li-Pol cells, ability to charge rapidly, ability to provide current even if deeply discharged, their relatively small inner resistance and possibility to provide currents in size that is minimally treble than their nominal capacity and during entire operation time without degradation of joints affected by the environment; ultracapacitors are used for their ability to provide, for a short term, high currents of series of thousands of farads without damage caused by thermal loss, have small inner resistance thanks to which they provide high energy output, can be charged from used cells - or eventually from connected power supply - in a very short time. Their disadvantages, which is not possible with common connection can be eliminated as well, namely their small mechanical durability (significant for Li-Pol cells), etc. The number of cells is given by requisite capacity and final voltage of new type of accumulator battery.

When high discharging current is required, this is provided mainly by ultracapacitors. The NiMH (Li-Ion, Li-Pol) cells, due to value of inner resistance and connection conductors and individual branches terminals, eventually due to electronic control unit if such is used, are not overcharged. Particular branches and joints have selective resistance specified regarding the type of cells (mainly due to their maximum discharging current).

For NiMH branch, Li-Ion or Li-Pol cells, the resistance is 3-10 times higher than for the branch of ultracapacitors. The resistance ratio and absolute size of those resistances, is dependent on type and characteristics of particular components.

This new type of accumulator battery can be discharged for a short-term by current, reaching the value of its nominal capacity multiplied 20 - 30 times.

During decrease of discharging current under the level of permanent discharging current of NiMH (Li-Ion, Li-Pol) cells, the ultracapacitors turn, into electrical appliances and their charging proceeds. The current by which the ultracapacitors are charged is dependent on the charge level of NiMH (Li-Ion, Li-Pol) cells, surrounding temperature and total amount of demanded energy, and is exponentially decreasing. Here described system enables to use NiMH (Li-Ion, Li-Pol) cells in facilities that demands the energy permanently, up to the tenth (when using NiMH cells) or treble (when using Li-Ion or Li-Pol cells) of capacity of used accumulator and, along with that, they fitfully demand a few seconds lasting currents of size up to 30 times of the nominal capacity of used accumulator, which was not possible so far. In temperatures below -20°C, where the maximum discharging current of NiMH (Li-Ion, Li-Pol) cells is decreasing to approx. 30% of the value reached in 20°C, the ultracapacitor is capable of delivering sufficient amount of current and so the functionality of the accumulator is guaranteed in temperatures down to -40°C. In respect to flat discharging characteristics of NiMH (Li-Ion, Li-Pol) cells and accumulator construction, this type of accumulator, is able to deliver the currents up to 20 times of the value of nominal capacity, even if deeply discharged under 10% of the nominal capacity.

The main advantages of present invention:
- The new type of accumulator battery does not contain lead, sulphuric acid solution or any other dangerous or toxic substances in the meaning of Directive 2002/95/EC RoHS in unbound form and therefore is ecologically harmless (toxic and dangerous substances in unbound form during storage and operation that is fully and hermetically separated from surrounding environment).
- The new type of accumulator battery is utilizable in wider range (-40 až 60° C) of operating temperatures.
- Due to use of ultracapacitors and flat discharging characteristics of NiMH (-Li-Ion, Li-Pol) cells, it is possible to start combustion engines even by accumulator battery that is discharged by 90% of its nominal capacity. Compared to the lead battery capacity, the accumulator battery with just half the capacity of first mentioned can be used f or corresponding apparatus.
- Described type of accumulator battery, due to its composition and combination of NiMH (Li-Ion, Li-Pol) cells and ultracapacitors, is lighter and smaller in size than lead batteries. The density of stored energy, according to the construction mode and election of NiMH (Li-Ion, Li-Pol) cells, starts at 150Wh/dm3 (lead accumulators typically 50Wh/dm3).
- Due to construction of used NiMH (Li-Ion, Li-Pol) cells, ultracapacitors, and monolithic construction of the accumulator battery itself, it is much more resistant to damage and vibrations. By virtue of the fact that ultracapacitors take part of the invention, it is possible to provide in series higher initiation current in full range of operating temperatures.

On the disadvantage side and in comparison with lead battery, we can consider the sensitivity to reversal of poles of the accumulator battery (if convenient compensational electronics is not applied) and generally higher discharge of NiMH (Li-Ion, Li-Pol) cells in temperatures over: 40°C, which, on the other hand, can be eliminated by using different NiMH (Li-Ion, Li-Pol) cells, but only at the price of limiting lower level of operating temperature ranging between -25°C and -30°C. When selecting Li-Pol (Li-Ion) cells as NiMH (Li-Ion, Li-Pol) cells, it is necessary to consider the use of electronic protection for control of charging and discharging currents.

New type of accumulator, battery consist in serial-parallel connection of NiMH, Li-Pol, eventually Li-Ion secondary cells or block of cells (on schemes marked as "B") and ultracapacitors (on schemes marked as "C"), placed into blocks with or without electronic control unit (on schemes marked as "E"). The required characteristics of individual blocks can be adjusted by suitable combination of, different types of NiMH (Li-Ion, Li-Pol) cells ultracapacitors and by electronic control unit setting. By said procedure the advantages of NiMH (Li-Ion, Li-Pol) can be taken, namely their high capacity comparing to their volume to weight ratio and, at the same time, the disadvantageous lower discharging current can be eliminated. To continue, the ultracapacitors advantages are, in particular, the high discharging, currents (approx. 1000A) and low inner resistance (approx. 1mΩ), and their disadvantageous low capacity can be eliminated. These blocks, according to needs on nominal voltage, required capacity, or eventually other demands, separately or together connected and with electronic control unit connection, are consequently embedded with convenient material getting monolithic product provided with terminals, and after hardening are prepared for use as a direct substitute of existing lead batteries and auto batteries.

The method of production of the battery according to this invention is characterized by that the serial-parallel connection of NiMH, Li-Pol, eventually Li-Ion secondary cells or blocks of cells and ultracapacitors into blocks, is realized. Consequently, better qualitative and, regarding the capacity, also quantitative characteristics of a new type battery are achieved.

The primary benefit of this invention is the possibility of using NiMH, Li-Pol, eventually Li-Ion secondary cells or blocks of cells and ultracapacitors into blocks, for initiation of compression-ignition and spark-ignition combustion engines and all types of motor vehicles, by serial-parallel connection of those above-identified components.

The battery according to this invention consist of at least one NiMH or Li-Pol accumulator, eventually Li-Ion secondary cells, eventually of blocks of cells and ultracapacitors, by using serial or parallel or serial-parallel connection.

In the below presented samples are shown technical parameters of the apparatus, depending on selection of used components, materials and type of construction.

### Brief Description of Drawings

**Fig.1a**
   - The battery created by serial-parallel connection of 10 NiMH cells B with nominal capacity 22Ah, nominal voltage 1,2V and maximum discharging current 2C, and 5 ultracapacitors C with capacity 400F, nominal voltage 2,7V and maximum current 500A.
**Fig. 1b**
   - Specification, of accumulator battery charging and discharging, according to into
      **Fig. 1a**
**Fig. 2a**
   - The battery created by serial-parallel connection fo 110 NiMH cells B with nominal capacity 4,5Ah, nominal voltage 1,2V and maximum discharging current 10C, and 10 ultracapacitors C with capacity 400F, nominal voltage 2,7V and maximum current 500A.
**Fig. 2b**
   - Specification of accumulator battery discharging, according to
      **Fig.2a**

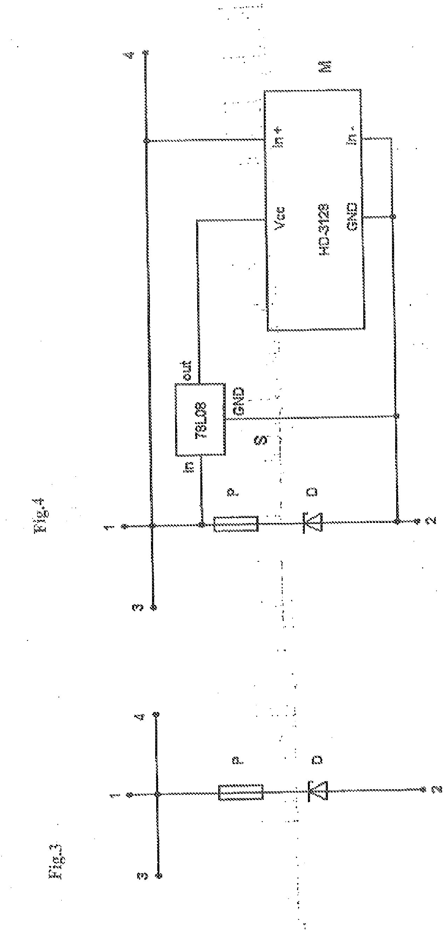

The apparatus shown in Fig. 3 consist of safety fuse P with nominal current 40m, Zener diode D with working voltage 15V, and connection conductors of sufficient cross section size:
The apparatus shown in Fig. 4, in addition to previous installation, has voltage stabilizer S with working Voltage 8V, and voltmeter M module that is able to measure and display the electric voltage between 0 to 20V.

The description of 'function of chosen samples of electronic control unit units E:
The unit E shown in Fig. 3 is composed of Zener diode, D for 15V and safety fuse P with nominal current 40mA connected into series. When reversing the polarity of the battery, the Zener diode D is opening and the current flows through the safety fuse P which causes its interruption. When connection to power source whose voltage is higher than 15V the Zener diode D is channeled in inverse direction so that the voltage is stabilized. If the voltage of the power source rises over approx. 17V, the current flowing through the safety fuse P exceeds 40mA and the fuse is consequently interrupted. The condition of safety fuse P or eventually of Zener diode D, is indicating whether the change of accumulator battery polarity has occurred, or if it has been connected to the power source with higher voltage than specified in the documentation.

The unit E shown in Fig. 4 consists of above described block shown in Fig. 3 and the voltmeter M module, supplied with power through the voltage stabilizer S set to measuring range of 20V, is shunted to this unit. Except the information whether the change of polarity occurred in the past or whether it was connected to power source with higher voltage than specified in the documentation, this unit also shows actual voltage status of the battery.

In added figures and schemes the characteristics and electronic connections for particular samples of invention are displayed.

### Industrial utilization

This type of accumulator battery is primarily designed for initiation of compression-ignition and spark-ignition combustion engines and batteries for all types; above all it is ecologic, modern and maintenance-free substitution of existing lead batteries used in motor vehicles.

Further it may be used as a "drive battery" in electro mobiles, electric scooters, wheelchairs, etc. Moreover, the utilization is possible in back-up power supply systems and the like.

### Examples of the embodiment of the technical solution

### Sample 1

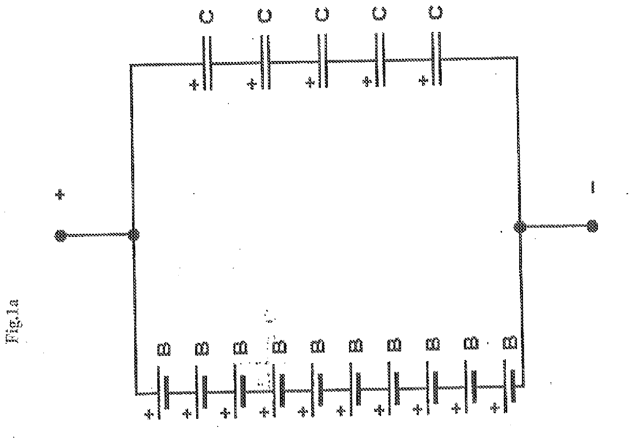

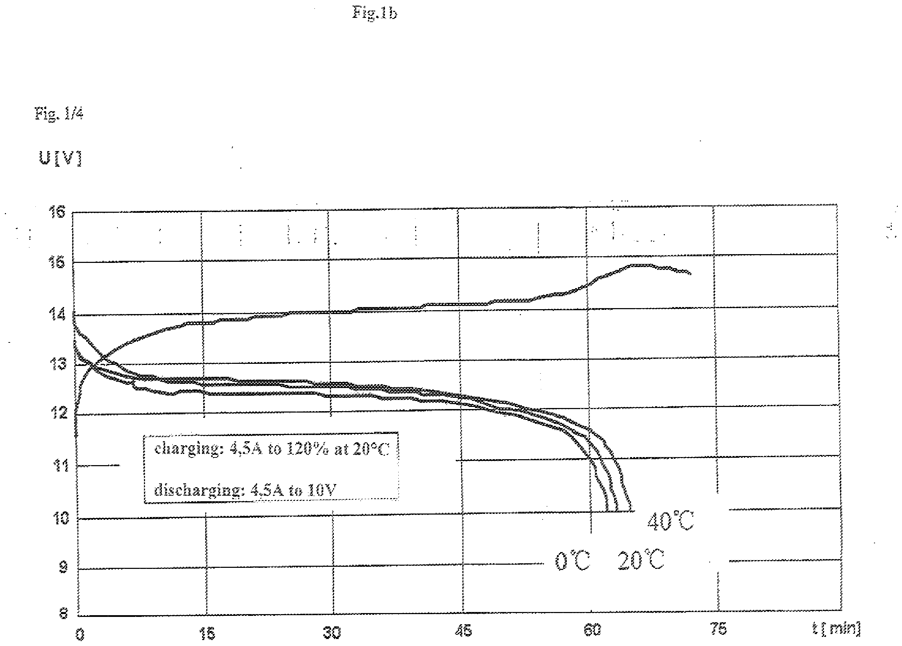

According to scheme 1, the battery is created by serial-parallel connection of 10 NiMH cells B with nominal capacity 22Ah, nominal voltage 1,2V and maximum discharging current 2C, and 5 ultracapacitors C with capacity 400F, nominal voltage 2,7V and maximum current 500A. This pack of batteries and cells, after connection completion, is potted with epoxy into monolithic unit. Technical features of this apparatus are shown in Tab. 1. The process of charging, long term discharging and short term initiation discharging by high current is shown in Fig. 1. This battery is primarily designed for initiation of spark-ignition engines up to 100kW and may replace ordinary lead- auto batteries of capacity ranging between 36 and 45Ah. H This battery does not contain any electronic control or master units.

The cross sections of conductors in all inner joints have respective surface 10mm², are made of copper and particular parts are coupled with SnAg3 solder.

The final mechanic embodiment, the size, type of epoxy, filling agent, shape, output distribution and cross sections of conductors are subject to desired utilization.

For use in motor vehicles, the chosen size is 207x175x175 mm (LxWxH), output poles are of type 1 and the battery polarity is 0. The epoxy contains thermally conductive filling agent based on aluminum.

### Sample 2

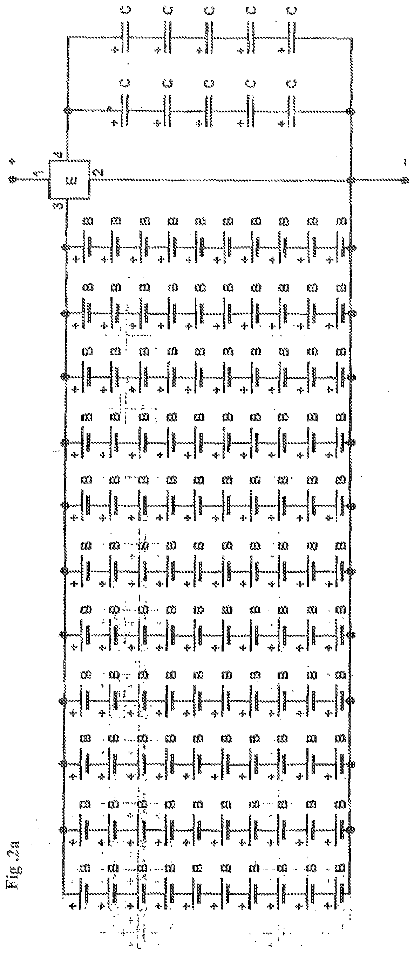

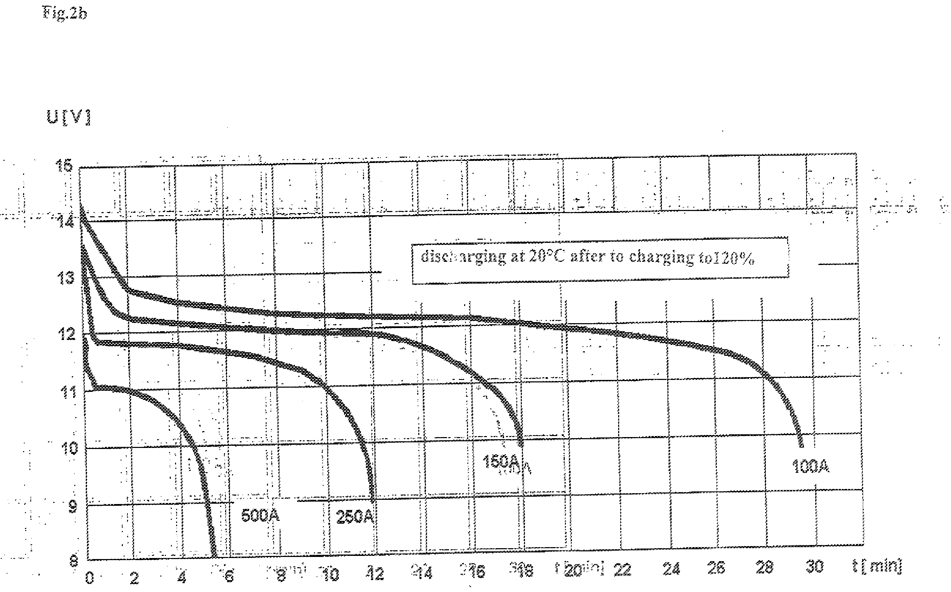

According to scheme 2, the battery is created by serial-parallel connection of 110 NiMH cells B with nominal capacity 4500mAh, nominal voltage 1,2V and maximum discharging current 40C, and 10 ultracapacitors C with capacity 400F, nominal voltage 2,7V and maximum current 500A. This pack of batteries and cells, after connection completion, is potted with epoxy into monolithic unit. Technical features of this apparatus are shown in Tab. 2. The process of charging, long term discharging and short term initiation discharging by high current is shown in Fig. 2. This battery is primarily designed for initiation of spark-ignition and compression-ignition engines up to 200kW and may replace ordinary lead auto batteries of capacity up to 100Ah. This battery contains electronic control unit E (Fig. 3, see description below) indicating whether the change of accumulator battery polarity has occurred in the past or if it has been connected to the power source with higher voltage than 15V.

The cross sections of conductors connecting cells B in series have respective surface 10mm², the cross sections of conductors connecting ultracapacitors C in series have surface 20mm² and connection terminals shunting all branches have surface 25mm². All conductors and terminals are made of copper and particular parts are coupled with SnAg3 solder.

The final mechanic embodiment, the size, type of epoxy, filling agent, shape, output distribution and cross sections of conductors are subject to desired utilization. For use in motor vehicles, the chosen size is 207x175x175 mm (LxWxH), output poles are of type 1 and the battery polarity is 0. The epoxy contains thermally conductive filling agent based on aluminum.

## Claims

1. An automotive battery comprising:
an anode battery terminal and a cathode battery terminal:
a plurality of serially connected cells each cell selected from a group consisting of NiMH - Nickel metal hydride cells and or Li-Ion - Lithium-Ion cells and or Li-Pol - Lithium polymer cells,
the cells being connected between the anode battery terminal and the cathode battery terminal thereby referencing the voltages of the anode and the cathode battery terminals and a plurality of serially connected ultracapacitors connected between the anode battery terminal and the cathode battery terminal thereby referencing the voltages of the anode and the cathode battery terminals, **characterized in that** the automotive battery is leadless, **in that** the serially connected cells and the serially connected ultracapacitors are parallel-connected between the anode battery terminal and the cathode battery terminal to define a parallel circuit between the anode battery terminal and the cathode battery terminal, and **in that** the anode and cathode battery terminals are terminals of the automotive battery, **in that** the resistance of the plurality of the serially connected cells is three to ten times resistance of the plurality of serially connected ultracapacitors,
**in that** the cells and the ultracapacitors are connected to charge and discharge through the cathode battery terminal,
**in that** the automotive battery is made as a solid monolithic unit, and
**in that** the solid monolithic unit includes the cells and the ultracapacitors potted with epoxy.

2. Automotive battery according to claim 1, **characterized in that** further comprising an electronic control unit connected between the serially connected ultracapacitors, the serially connected cells and one of the two terminals and configured for interruption if polarity of the battery is reversed.

3. Automotive battery according to claim 2, **characterized in that** the electronic control unit comprises at least a Zener diode, a voltage stabilizer a voltmeter module and safety fuse.

4. Automotive battery according to claim 1, **characterized in that** the epoxy contains a thermally conducting filling agent based on aluminium.

5. Automotive battery according to claim 4, **characterized in that** further comprising a controller unit that includes a safety fuse connected between the serially connected cells and the serially connected ultracapacitors and is interrupted when the polarity of the battery is reversed.

6. Automotive battery according to claim 5, **characterized in that** further comprising a zener diode connected to the safety fuse to provide current of the safety fuse when the polarity of the battery is reversed.

## Patentansprüche

1. Autobatterie, umfassend:
eine Anoden-Batterieklemme und eine Kathoden-Batterieklemme,
eine Vielzahl von in Reihe geschalteten Zellen, wobei jede Zelle aus einer Gruppe ausgewählt ist, die aus Nickelmetallhydridzellen (NiMH-Zellen) und/oder Lithiumionenzellen (Li-Ion-Zellen) und/oder Lithiumpolymerzellen (Li-Pol-Zellen) besteht,
wobei die Zellen zwischen der Anoden-Batterieklemme und der Kathoden-Batterieklemme angeschlossen sind, wodurch auf die Spannungen der Anoden- und der Kathoden-Batterieklemme Bezug genommen wird, und eine Vielzahl von in Reihe geschalteten Ultrakondensatoren zwischen der Anoden-Batterieklemme und der Kathoden-Batterieklemme angeschlossen ist, wodurch auf die Spannungen der Anoden- und Kathodenbatterie-Klemme Bezug genommen wird, **dadurch gekennzeichnet, dass** die Autobatterie bleifrei ist, **dadurch, dass** die in Reihe geschalteten Zellen und die in Reihe geschalteten Ultrakondensatoren zwischen der Anoden-Batterieklemme und der Kathoden-Batterieklemme parallelgeschaltet sind, um einen Parallelkreis zwischen der Anoden-Batterieklemme und der Kathoden-Batterieklemme zu definieren, und **dadurch, dass** die Anoden- und Kathoden-Batterieklemme Anschlüsse der Autobatterie sind, **dadurch, dass** der Widerstand der Vielzahl der in Reihe geschalteten Zellen ein drei- oder zehnfaches des Widerstands der Vielzahl von in Reihe geschalteten Ultrakondensatoren ist, **dadurch, dass** die Zellen und die Ultrakondensatoren verbunden sind, um ein Laden und Entladen durch die Kathoden-Batterieklemme vorzunehmen, **dadurch, dass** die Autobatterie als feste monolithische Einheit gefertigt ist und **dadurch, dass** die feste monolithische Einheit die Zellen und die Ultrakondensatoren mit Epoxid vergossen beinhaltet.

2. Autobatterie nach Anspruch 1, **gekennzeichnet durch** ferner umfassend eine elektronische Steuereinheit, die zwischen den in Reihe geschalteten Ultrakondensatoren angeschlossen ist, wobei die in Reihe geschalteten Zellen und eine der zwei Klemmen zur Unterbrechung konfiguriert sind, wenn eine Polarität der Batterie umgekehrt wird.

3. Autobatterie nach Anspruch 2, **dadurch gekennzeichnet, dass** die elektronische Steuereinheit zumindest eine Zener-Diode, einen Spannungsregler und ein Voltmeter-Modul- und eine Voltmeter-Schutzsicherung umfasst.

4. Autobatterie nach Anspruch 1, **gekennzeichnet dadurch, dass** das Epoxid einen wärmeleitenden Füllstoff enthält, der auf Aluminium basiert.

5. Autobatterie nach Anspruch 4, **gekennzeichnet durch** ferner umfassend eine Steuereinheit, die eine Schutzsicherung beinhaltet, die zwischen den in Reihe geschalteten Zellen und den in Reihe geschalteten Ultrakondensatoren angeschlossen ist und unterbrochen wird, wenn die Polarität der Batterie umgekehrt wird.

6. Autobatterie nach Anspruch 5, **gekennzeichnet durch** ferner umfassend eine Zener-Diode, die mit der Schutzsicherung verbunden ist, um einen Strom der Schutzsicherung bereitzustellen, wenn die Polarität der Batterie umgekehrt wird.

## Revendications

1. Une batterie de voiture comprenant :
une borne de batterie en anode et une borne de batterie en cathode :
plusieurs cellules connectées en série, chaque cellule étant choisie dans un groupe constitué de cellules NiMH - Nickel-Hydrure Métallique et / ou Li-Ion - Lithium-Ion et / ou Li-Pol - Lithium Polymère,
les cellules étant connectées entre la borne de batterie en anode et la borne de batterie en cathode référençant ainsi les tensions des bornes de batterie en anode et en cathode, les ultracondensateurs multiples en série connectés entre la borne de batterie en anode et la borne de batterie en cathode référençant aussi les tensions des bornes de batterie en anode et en cathode, **caractérisée en ce que** la batterie de voiture ne contient pas de plomb, **en ce que** les cellules connectées en série et les ultracondensateurs connectés en série sont connectés en parallèle entre la borne de batterie en anode et la borne de batterie en cathode pour définir un circuit parallèle entre la borne de batterie en anode et la borne de batterie en cathode, **en ce que** les bornes de batterie en anode et en cathode sont des bornes de batterie de voiture, **en ce que** la résistance des cellules multiples connectées en série est égale à trois à dix fois la résistance des ultracondensateurs multiples connectés en série, **en ce que** les cellules et
les ultracondensateurs sont connectés aux fins de charge et de décharge à travers la borne de batterie en cathode, **en ce que** la batterie de voiture est conçue sous forme d'une unité monolithique solide, et **en ce que** l'unité monolithique solide comprend les cellules et les ultracondensateurs encapsulés dans de l'époxy.

2. Batterie de voiture conformément à la revendication 1, **caractérisée en ce qu'**elle comprend de plus une unité de commande électronique connectée entre les ultracondensateurs connectés en série, les cellules connectées en série et une des deux bornes, et configurée aux fins de coupure en cas d'inversion de la polarité de la batterie.

3. Batterie de voiture conformément à la revendication 2, **caractérisée en ce que** l'unité de commande électronique comprend au minimum une diode Zener, un stabilisateur de tension, un module de voltmètre et un fusible de sécurité.

4. Batterie de voiture conformément à la revendication 1, **caractérisée en ce que** l'époxy contient un agent de remplissage thermo-conducteur à base d'aluminium.

5. Batterie de voiture conformément à la revendication 4, **caractérisée en ce qu'**elle comprend de plus une unité de commande qui comprend un fusible de sécurité connecté entre les cellules connectées en série et les ultracondensateurs connectés en série, configuré aux fins de coupure en cas d'inversion de la polarité de la batterie.

6. Batterie de voiture conformément à la revendication 5, **caractérisée en ce qu'**elle comprend de plus une diode Zener connectée au fusible de sécurité permettant d'alimenter le fusible de sécurité lorsque la polarité de la batterie est inversée.
